# EUROPEAN PATENT APPLICATION

(11) **EP 1 576 935 A1**
(43) Date of publication of application: **21.09.2005**
(21) Application number: 04101079.4
(22) Date of filing: 16.03.2004
(51) Int. Cl.: A61C 8/00

(54) **Endosseous dental implant**

(71) Applicant: Giordano, Alberto, Dr., 21100 Varese (IT)
(72) Inventor: Giordano, Alberto, Dr., 21100 Varese (IT)
(74) Representative: Ponzellini, Gianmarco

(57) **Abstract**

It is disclosed an endosseous dental implant (1) having an anchoring portion (2) provided with a male threading (7) and externally extending along the anchoring portion (2) itself, for engagement into a bony tissue (3) of an upper or lower jaw. Disposed at a first end (2a) of the anchoring portion (2) is a head portion (5). Seen in longitudinal section and at a connecting region (10) with the head portion (5), the anchoring portion (2) has a smaller thickness (S) than the thickness (T) of the head portion (2) itself.

## Description

The present invention relates to an endosseous dental implant.

It is known that endosseous dental implants are typically used when it is necessary to carry out a replacement of the whole root of a tooth that for example has reached an excessive state of deterioration and therefore is no longer able to accomplish its task.

Endosseous dental implants presently available on the market are substantially of two different types.

A first type of endosseous implants commonly known to those skilled in the art as buried implants, contemplates use of cylindrical elements of different sizes possibly provided with surface working to promote anchoring to the patient's mandibular bone or jawbone.

These cylindrical elements are inserted in suitable cavities that the dentist or dental surgeon must drill at the maxilla or mandible point where the implant is to be installed.

Practically, the dentist carries out opening of the mucous membrane to make a well in the patient's bone the diameter of which is substantially the same as the diameter of the cylinder to be inserted and then carries out insertion of the implant and closure of the mucous membrane.

Afterwards, a period of about 4-6 months of wait is required to enable the bony tissue to grow again thereby penetrating into the gorges provided on the surface of the cylindrical body, so that stabilisation of said cylindrical body is caused as it forms a single body with the bony tissue.

Once the cylindrical implant has been welded to the upper or lower jaw, anchoring to an end portion of said implant is made possible in order to carry out the engagement of an outer structure or stump which in turn is designed to receive an appropriate crown that will define the shape of an artificial tooth.

Beside the above described buried implants, a second type of implants has been available on the market for many years, said implants being sometimes known as "Tramonte" implants and consisting of a single monolithic piece having a threaded anchoring portion designed to be inserted by screwing into the patient's bony tissue and a head portion designed to emerge from the gums mucosa to constitute an attachment element for a tooth crown.

Typically, for this type of implants holes of a reduced diameter are required to be drilled in the patient's bony tissue, said holes corresponding to the core of the threaded anchoring portion of the implant itself (about 2 mm).

Once drilling has been carried out and the hole has been at least partly tapped, screwing of the anchoring portion into the hole itself is carried out until the desired axial position is reached.

Since this type of implants is by its own nature self-supporting and since holes of very reduced radial size are required for it, on the one hand it is immediately operational and, on the other hand, it greatly reduces traumas to the patients.

Both these types of implants have had a wide spread on the market; presently buried implants and "Tramonte" implants of different shapes and sizes are available that are able to meet a great number of requirements of anatomic nature encountered with the different patients.

In spite of the great success obtained on the market, the above described implants however have some important drawbacks.

These drawbacks are closely connected with setting of the implants in the front portion of the upper dental arch (maxilla). In fact it is to be pointed out that the maxilla front portion has a bone thickness much smaller than the rest of the maxilla and the mandible. In detail, over the maxilla there is the maxillary sinus in communication with the contiguous nasal fossa. Therefore, the bone thickness defined from the mucous membrane to the maxillary sinus is varying from a patient to another and often very thin.

The thickness of the bony tissue can even be smaller than the length of the anchoring portion that, when inserted into the bony tissue, may run the risk of making a hole in the mucous membrane covering the bony tissue itself.

Under this situation, it is necessary to make the bone cavity without completely drilling the thickness of the maxilla bone, but leaving a thin layer thereof so as not to tear the membrane dividing the maxillary sinus from the bone itself. Subsequently, by appropriate percussion means (osteotomes) the thin anchoring bone layer is crushed and the anchoring portion is inserted into the bone cavity thus formed. The upper end of the anchoring portion is inserted in the maxillary bone after completely passing through the thickness of same until pushing and lifting the membrane at the inside of the maxillary sinus. Thus a hollow space is created between the membrane and the end of the anchoring portion coming out of the bony tissue, which space is adapted to receive the new growth of the bony tissue itself.

As pointed out above, this particular operation has many drawbacks. First of all it is to be noted that generally the upper end of the anchoring portion has a pointed shape or a shape with sharp corners belonging to the screw threading or due to the mere conformation of the anchoring portion (which is cylindrical with a circular cross-section for example). Under this situation, during the operation involving lifting of the membrane, the sharp corners exert a thrust action on the membrane, so that said membrane will be damaged and even torn. Damaging of the membrane is particularly dangerous exactly due to the particular protective function of the latter on the bony tissue, as well as due to the blood effusion that could take place in the maxillary sinus and nasal fossa, thereby giving rise to infection problems.

In addition, the new bone portion growth taking place within the membrane is very small and it is not always sufficient to ensure a good grip with the anchoring portion. This disadvantage is due above all to the fact that the membrane portion being pulled becomes slack because of its elastic features and lays on the anchoring portion thereby reducing the volume of the hollow space where the new bony tissue growth occurs.

After the above statements, the present invention mainly aims at making available a new endosseous dental implant capable of combining the positive aspects typical of the implants presently on the market with a greater reliability in the positioning operations at the maxillary sinus.

In particular, it is an aim of the invention to make available an implant that does not tear the membrane dividing the bony tissue from the maxillary sinus.

In addition, it is an important aim of the invention to make available an implant ensuring a greater volume of the new-growth bony tissue thereby creating a more reliable implant with a stronger grip.

It is a further important aim of the invention to make available a versatile implant to be substantially used at any maxillary and mandibular position of the patient.

The foregoing and further aims that will become more apparent in the course of the following description are substantially achieved by an endosseous dental implant having the features set out in the appended claim 1.

This description will be taken hereinafter with reference to the accompanying drawings, given by way of nonlimiting example, in which:
- Fig. 1 is a longitudinal diagrammatic section view of the implant in reference; and
- Fig. 2 is a diagrammatic section view of a portion of the maxillary bony tissue with which the implant shown in Fig. 1 is associated.

With reference to the accompanying drawings, an endosseous dental implant in accordance with the present invention has been generally identified by reference numeral 1.

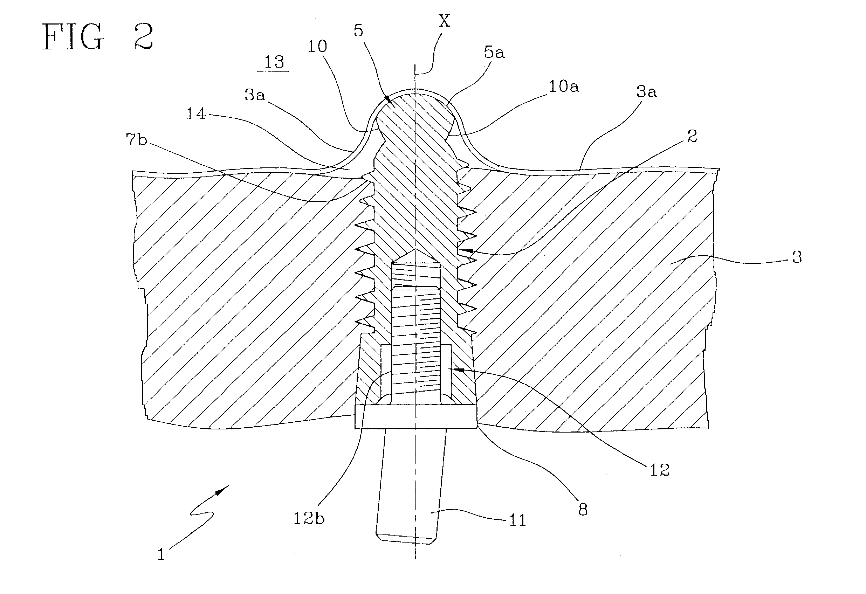

In the embodiment shown in Fig. 2 it is to be pointed out that the dental implant 1 is engaged with a front portion of the maxilla or upper jaw 3. However the dental implant 1 can be indifferently used at any position of the maxillary or mandibular dental arch.

The implant 1 conventionally comprises an anchoring portion 2 intended for engagement in a bony tissue of an upper jaw 3 or lower jaw of a patient submitted to a surgical operation.

The anchoring portion 2 has a male threading 7 externally extending around the anchoring portion 2.

Advantageously, the anchoring portion 2 extends along a longitudinal axis X thereof and has a substantially cylindrical conformation defined between a first end 2a and a second end 2b opposite to the first end 2a.

Connected with the first end 2a of the anchoring portion 2 is a head portion 5 defining an apical region 4 of the dental implant 1. Advantageously, the anchoring portion. 2 and head 5 are made of one piece construction.

In more detail, the anchoring portion 2 has a cylindrical or slightly frustoconical core or web 6. A helix or spiral 7a wound up around the core defines the male threading 7 and is designed to be inserted in a canal 8 previously made in the bony tissue of the maxilla 3.

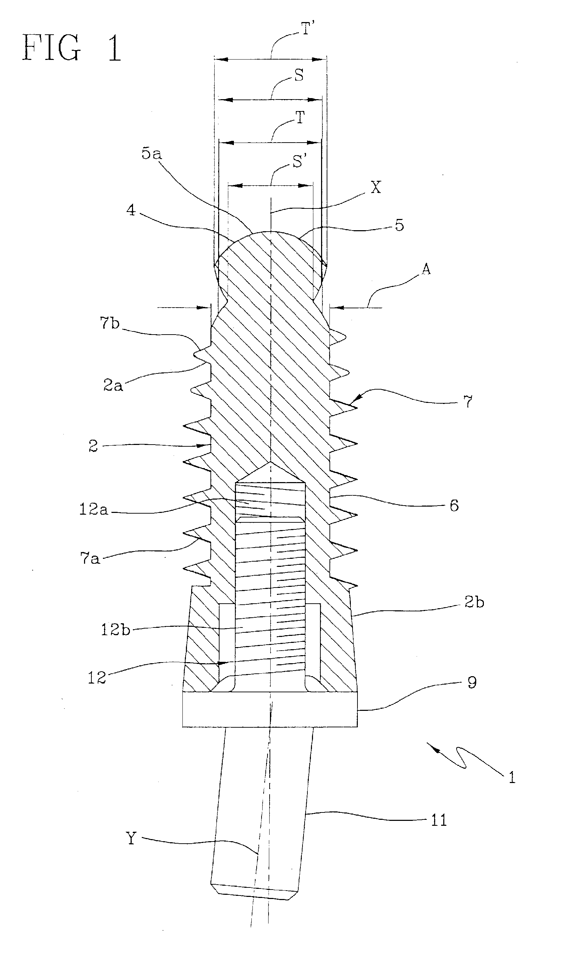

As shown in Fig. 1, following the longitudinal section extension of the implant 1 from a distal region 9 to the apical region 4, core 6 generally has a substantially constant thickness A along the whole extension thereof. Should the anchoring portion 2 have a frustoconical core 6, the thickness A will be slightly decreasing towards the apical region 4.

Going on along the longitudinal section of implant 1 towards the apical region 4, it is to be pointed out that the anchoring portion 2 at a connecting region 10 with the head portion 5 has a gradually decreasing thickness S. In detail, thickness S decreases until a point of minimum width S' and then starts increasing again at the head 5.

The head portion 5 therefore has, still seen in longitudinal section, an increasing thickness T until a point T of maximum bulkiness is reached and then it decreases again towards the apical region 4.

Advantageously, the head 5 has a substantially ball-shaped conformation therefore defining a rounded upper surface 5a preferably in the form of a spherical cap. It is to be noted that the thickness of maximum bulkiness T' of head 5 is smaller than or the same as the thickness A of the anchoring portion 2.

The above aims at allowing insertion of the implant into the patient's bone once a hole has been drilled therein.

In addition, as clearly shown in the accompanying drawings, the connecting region 10 of the anchoring portion 2 always has a smaller thickness S as compared with thickness T of head 5 and thickness A of the anchoring portion 2.

In more detail, the connecting region 10 of the anchoring portion 2 defines an undercut 10a extending in concentric relationship with the longitudinal axis X along the whole outer surface of the anchoring portion 2.

Again it is to be pointed out that the threading 7 further has, at the connecting region 10, an end helix 7b having a smaller radial bulkiness than the radial bulkiness of helix 7a.

The structure highlighted above, when operations involving lifting of the membrane of the nasal sinus are concerned, on the one hand allows concentrated efforts not to be created on said membrane, and on the other hand allows the membrane itself to be maintained away from the threading and, exactly due to the presence of the undercut or removed portion, enables the available volume for the new bone growth to be increased, which will bring about increasing of the steadiness and grip of the implant itself that is therefore maintained in place.

In addition implant 1 is provided, at said distal region 9, with a stump 11 engaged with the second end 2b of the anchoring portion 2. Stump 11 can have a substantially cylindrical or conical extension or another suitable shape and is designed to emerge at least partly from the bony tissue under use conditions of the implant 1. In fact, stump 11 is adapted to bear a dental prosthesis, by known cementing means that therefore are not further described and illustrated.

Advantageously, stump 11 can extend along a longitudinal axis Y thereof that is parallel or inclined to the longitudinal axis X of the anchoring portion 2. In the second case the dental prosthesis to be engaged with stump 11 will be already oriented without further positioning operations being required.

In fact during the stump-screwing step in a buried implant, the stump itself will be able to take different angular positions and it will be the dental surgeon that will establish the most suitable one for the patient.

In one embodiment, implant 1 comprises, at the second end 2a of the anchoring portion 2, engagement means 12 set for associating said stump 1 with the anchoring portion 2 itself.

This engagement means 12 may consist of screw couplings or technically similar elements, formed on the second end 2a and on the stump 11 itself. For example, shown in the figures are engagement elements 12 consisting of a seat 12a adapted to receive a threaded head 12b by screw coupling.

Alternatively, stump 11 can also be advantageously made of one piece construction with the anchoring portion 2.

In addition, it is to be pointed out that in terms of construction the implant 1 is made of a biocompatible material, preferably a biocompatible metal. For example the implant 1 can be fully made of titanium (possibly surface-sandblasted), which material offers good mechanical performance combined with high biocompatibility.

As regards axial extension of the radial sizes, number of threads and other features, it is apparent that they can vary depending on requirements, for example depending on the root that the implant must replace or more generally, on the anatomic features of the patient's concerned region.

After describing the invention mainly as regards structure, the process for installation of the implant 1 in accordance with the invention is now briefly examined.

First the dental surgeon prepares an appropriate canal 8 at the maxilla or mandible region to be submitted to treatment (see the maxilla region shown in Fig. 2, for example). Canal 8 will have an extension or axial depth sufficient to house the anchoring portion 2 and a diameter approximately corresponding to the diameter of the anchoring portion core 6.

Preferably and if necessary the dental surgeon then carries out a short tapping step to facilitate fitting of the anchoring portion 2 into the respective canal 8 and coupling therewith. In detail, canal 8 is formed by use of suitably studied dental drills having a series of drilling bits of different lengths and diameters. These tips are set to form canal 8 and to be inserted in the bony tissue to some depth determined by an appropriate mechanical stop means. In other words, once the sizes of the patient's bone have been established (through a radiography, for example), the dental surgeon prepares the dental drill by associating a bit of the desired radial and axial sizes therewith, so as to create a canal almost reaching the membrane without however running the risk of making a hole in it.

In the case shown in Fig. 2, in which the implant is fitted in the maxilla at the maxillary sinus 13, the drill forms the canal leaving a thin bone layer to protect said membrane 3a separating the bony tissue from the maxillary sinus.

Subsequently, first the bone layer is compacted and then crushed with an appropriate osteotome. In more detail, the used osteotome is advantageously provided with many working bits that can be replaced and that are different from each other depending on their length and diameter. In this way, based on the thickness of the bone layer to be drilled the most appropriate bit is selected which has a mechanical stop means too, thereby safely establishing the length of the stroke to be run by the osteotome for crushing the bony tissue without touching and/or damaging the membrane 3a. In this manner the operator may safely break the bone layer without being obliged to pay too much attention in order not to damage the membrane 3a, since the mechanical stop means of the osteotome does not allow the bit to be inserted to such an extent that it goes beyond the membrane 3a.

After carrying out these steps the operator prepares the endosseous implant 1 having axial and radial sizes adapted for the particular situation.

Subsequently, using appropriate operating elements of known type, the anchoring portion 2 can be screwed down into the respective cavity and therefore an immediate fastening of implant 1 is obtained.

In this way, the head portion 5 emerges on top from the bony tissue of the maxilla 3 and the upper surface 5a of the head portion 5 itself pushes the membrane 3a towards the maxillary sinus 13 separating it from the bony tissue. Thus a hollow space 14 is formed that is included between the membrane 3a, the undercut 10a and the upper bone surface. Advantageously, within the hollow space 14 a new growth of bony tissue takes place in time, which tissue engages the head and anchoring portion 2 in an irremovable manner. In a subsequent step, should not stump 11 be made of one piece construction with the anchoring portion 2, the operator will possibly act on the distal portion and associate the respective stump 11 therewith, with the aid of said engagement means 12.'

This operation too can be of a personalised type depending on the tooth for which restoration is required or, alternatively, an overstructure of a general shape can be provided to be then submitted to working and material-removal operations by the dentist.

At this point, after obtaining the cast of the head portion with the relevant overstructure, application of a final crown will be possible so that the whole dental structure in sight will be restored.

The invention achieves important advantages.

First of all the implant 1 being the object of the invention, when there are operations requiring lifting of the membrane of the nasal sinus is able not to damage the membrane 3a itself.

In fact it is apparent that, due to the conformation of the head portion 5 having the shape of a spherical cap, the membrane can be raised without being torn since no sharp corners are in contact with said membrane. In addition, the end helix 7b does not come into contact with the side portions of the membrane 3a because, on the one hand, the head conformation causes the membrane to move away and, on the other hand, it takes up less radial room than helix 7a.

In addition, a further advantage resides in that the holding space 14 that is formed has a very wide volume which is sufficient to ensure a good grip between the implant 1 and the bone. This advantage is due to the presence of the undercut 10a and in particular to the very reduced thickness S as compared with the rest of the implant 1, exactly for the purpose of obtaining room enough between the membrane 3a and the connecting region 10.

Furthermore, the implant 1 is very versatile because not only it can be used at any position of the mandible or maxilla, but it can be provided with a stump 11 made of one piece construction with the anchoring portion 2 or a stump to be engaged therewith.

A final advantage resides in the possibility of using a stump 11 with an inclined axis that must not be manually bent with respect to the anchoring portion 2 as it is already offset with respect to said anchoring portion 2.

## Claims

1. An endosseous dental implant comprising:
an anchoring portion (2) having a male threading (7) externally extending along the anchoring portion (2) itself, for engagement into a bony tissue (3) of an upper jaw (maxilla) or lower jaw (mandible);
- a head portion (5) disposed at a first upper end (2a) of the anchoring portion (2), said head portion (5) being designed to be positioned at the maxillary sinus of a patient under use conditions of the implant,
**characterised in that**, seen in longitudinal section and at a connecting region (10) with the head portion (5), the anchoring portion (2) has a smaller thickness (S) than the thickness (T) of the head portion (5) itself.

2. A dental implant as claimed in claim 1, **characterised in that** said head portion (5) has a substantially rounded upper surface (5a), preferably in the form of a spherical cap.

3. A dental implant as claimed in claim 1, **characterised in that** when the dental implant (1) is to be positioned in a patient the head portion (5) is designed to emerge at least partly from said bony tissue (3).

4. A dental implant as claimed in claim 2 or 3,
**characterised in that**, seen in longitudinal section and at a distal portion (9) of the implant (1), the thickness (T) of the head portion (5) is smaller than or equal to the thickness (A) of the anchoring portion (2).

5. A dental implant as claimed in anyone of the preceding claims, **characterised in that** said anchoring portion (2) and head portion (5) are of one piece construction.

6. A dental implant as claimed in anyone of the preceding claims, **characterised in that** said anchoring portion (2) has a cylindrical or slightly frustoconical core (6) extending away from the head portion (5), said core (6) supporting at least one helix (7a) defining said male threading (7) designed to be inserted in a canal (8) previously prepared in the bony tissue (3) of the upper or lower jaw of a patient.

7. A dental implant as claimed in anyone of the preceding claims, **characterised in that** said connecting region (10) of the anchoring portion (2) defines at least one undercut (10a).

8. A dental implant as claimed in anyone of the preceding claims, **characterised in that** it further comprises a stump (11) engaged with a second end (2b) of the anchoring portion (2) opposite to the first one (2a), said stump (11) having a longitudinal axis (Y) inclined to a longitudinal axis (X) of the anchoring portion (2).

9. A dental implant as claimed in the preceding claim,
**characterised in that** it further comprises engagement means (12) disposed at said second end (2b) of the anchoring portion (2) for associating the stump (11) with the anchoring portion (2) itself.

10. A dental implant as claimed in claim 8, **characterised in that** said stump (11) and anchoring portion (2) are of one piece construction.

11. A dental implant as claimed in anyone of the preceding claims, **characterised in that** it is made of a bio-compatible material, preferably a bio-compatible metal.

12. A dental implant as claimed in anyone of the preceding claims, **characterised in that** said threading (7) has an end helix (7b) disposed at the connecting region (10), said end helix (7b) having a radial bulkiness smaller than the radial bulkiness of other helices.
